Europäisches Patentamt

European Patent Office

Office européen des brevets

(19)

(11) Veröffentlichungsnummer: **0 121 777**
**A2**

(12) # EUROPÄISCHE PATENTANMELDUNG

(21) Anmeldenummer: **84102461.5**

(22) Anmeldetag: **08.03.84**

(51) Int. Cl.³: **C 08 B 37/16**

(30) Priorität: **11.03.83 HU 83883**

(43) Veröffentlichungstag der Anmeldung: **17.10.84**
**Patentblatt 84/42**

(84) Benannte Vertragsstaaten: **AT BE CH DE FR GB IT LI LU NL SE**

(71) Anmelder: **Consortium für elektrochemische Industrie GmbH, Zielstattstrasse 20, D-8000 München 70 (DE)**

(72) Erfinder: **Szejtli, József, Dr., Endrödi S.u.38-40, H-1026 Budapest (HU)**
Erfinder: **Lipták, András, Dr., Fáy A-u.6, H-4027 Debrecen (HU)**
Erfinder: **Nánási, Pál, Dr., Batthyny-u.9, H-4024 Debrecen (HU)**
Erfinder: **Fügedi, Péter, Dr., Kun B-u.6, H-4027 Debrecen (HU)**
Erfinder: **Jodál, Ildikó, Dr., Gyöngyösi u.12, H-4027 Debrecen (HU)**
Erfinder: **Kandra, Lili, Dr., Krónikás u.4/a, H-4031 Debrecen (HU)**
Erfinder: **Jánossy, Lóránt, Böszörményi u. 83, H-4032 Debrecen (HU)**

(54) **Verfahren zur Herstellung von Heptakis-(2.6-di-O-methyl)-beta-cyclodextrin.**

(57) Die Erfindung betrifft ein Verfahren zur Herstellung von Heptakis-[2.6.-di-O-methyl]-β-cyclodextrin durch Methylieren von β-Cyclodextrin in organischer Phase, wobei β-Cyclodextrin in Gegenwart von Alkalihydroxid mit Dimethylsulfat bei Temperaturen von −10 bis 0°C methyliert wird.

EP 0 121 777 A2

0121777

Consortium

für elektrochemische Industrie
GmbH

München, den 15.2.1984
PAT/Dr.Ra/we

Co 8401
=======

Verfahren zur Herstellung von Heptakis-[2.6-di-O-methyl]-ß-cyclodextrin

Die Erfindung betrifft die Herstellung von Heptakis-[2.6-di-O-methyl]-ß-cyclodextrin, im folgenden auch als Dimethyl-ß-cyclodextrin bezeichnet, durch Methylierung von ß-Cyclodextrin in organischer Phase.

Die partiell methylierten Derivate des ß-Cyclodextrins weisen zwischen 1 und 20 durch Methoxygruppen substituierte OH-Gruppen auf. Entsprechend werden diese Derivate charakterisiert durch den durchschnittlichen Substitutionsgrad pro ß-Cyclodextrineinheit. Von besonderem Interesse sind das Monomethylderivat, das pro Molekül ß-Cyclodextrin 7 Methoxygruppen aufweist und das Dimethyl-ß-cyclodextrin, das pro Molekül ß-Cyclodextrin 14 Methoxygruppen aufweist.

Es sind bereits eine Anzahl von Verfahren zur Methylierung von Cyclodextrin bekanntgeworden, wobei sowohl wäßrige als auch organische Medien verwendet wurden.

Gemäß dem ungarischen Patent 180 580 wird im wäßrigen Medium methyliert. Nachteiligerweise muß jedoch zum Erreichen eines Methylierungsgrades, der dem Dimethyl-ß-cyclodextrin entspricht, in mehreren Stufen methyliert werden.

Gemäß "Berichte", 69, 2041, 1936, kann die Permethylierung von α-Cyclodextrin zum Hexakis[2.3.6-tri-O-methyl]-α-cyclodextrin in flüssigem Ammoniak in Gegenwart von metallischem Kalium in einer Stufe erfolgen. Die Permethylierung von ß-Cyclodextrin nach der gleichen Methode gelingt jedoch nur nach 18 wiederholten Methylierungsschritten.

Laut "Tetrahedron", 24, 803, 1968, konnten sowohl α- als auch ß-Cyclodextrin in Dimethylformamid in Gegenwart von Bariumoxid mit Methyljodid erfolgreich permethyliert werden. In der gleichen Veröffentlichung wurde ferner die selektive Methylierung von α- bzw. ß-Cyclodextrin zu kristallinem Hexakis-[2.6- di-O-methyl]-α-cyclodextrin bzw. Heptakis-[2.6-di-O-methyl]- ß-cyclodextrin beschrieben, wobei in einem 1 : 1-Gemisch aus Dimethylformamid und Dimethylsulfoxid in Gegenwart von Bariumoxid oder Bariumhydroxid mit Dimethylsulfat methyliert wurde.

Es sind ferner gemäß Bioorg. Chem. 5, 121, 1976 und "Stärke", 28, 226, 1976 und "Stärke", 26, 111, 1974 selektive Methylierungsverfahren zur Herstellung der Monomethylderivate der Cyclodextrine bekanntgeworden, wobei entweder in organischen Medien in Gegenwart von Bariumsalzen methyliert wurde oder die selektive Methylierung durch vorheriges Einführen von Schutzgruppen gewährleistet wurde.

Generell läßt sich die Permethylierung der Cyclodextrine einfacher durchführen, als die selektive Methylierung. Es wird zumeist in organischen Lösungsmitteln gearbeitet. Zur selektiven Methylierung der ß-Cyclodextrine unter Vermeidung der Methylierung an der C-3-Position konnten gemäß Stand der Technik erfolgreich Bariumsalze eingesetzt werden. Nachteiligerweise führt jedoch die Gegenwart von Bariumsalzen, die in stöchiometrischen Mengen eingesetzt werden müssen, in organischen Medien zu hochviskosen Reaktionsgemischen, die im industriellen Maßstab nicht verarbeitet werden können. Der Einsatz der giftigen Bariumsalze schafft zudem erhebliche toxische und ökologische Probleme.

Von praktischem Interesse unter den partiell methylierten Cyclodextrinen ist aufgrund seiner Komplexierungseigenschaften Heptakis-[2.6-di-O-methyl]-ß-cyclodextrin. Hierzu sei verwiesen auf "Carbohydride Research", 76, 59, 1979 und die ungarische Patentanmeldung 1141/80.

Aufgabe der Erfindung war es, ein Verfahren zur partiellen Methylierung von ß-Cyclodextrin zu entwickeln, das die Herstellung von Heptakis-[2.6-di-O-methyl]-ß-cyclodextrin im industriellen Maßstab ermöglicht, ohne daß toxische Nebenprodukte auftreten.

Es wurde nun gefunden, daß die Methylierung von ß-Cyclodextrin in organischer Phase in Gegenwart von Alkalihydroxid mit hoher Selektivität unter Bildung von Heptakis-[2.6-di-O-methyl]-ß-cyclodextrin verläuft, wenn die Methylierung mit Dimethylsulfat im Temperaturbereich von - 10 bis 0 °C durchgeführt wird.

Gegenstand der Erfindung ist somit ein Verfahren zur Herstellung von Heptakis-[2.6-di-O-methyl]-ß-cyclodextrin durch Methylierung von ß-Cyclodextrin in organischer Phase, das dadurch gekennzeichnet ist, daß ß-Cyclodextrin in Gegenwart von Alkalihydroxid mit Dimethylsulfat bei Temperaturen von - 10 bis 0 °C methyliert wird.

Als organisches Lösungsmittel wird vorzugsweise Dimethylformamid verwendet. Weitere Beispiele sind Dimethylsulfoxid oder Gemische von Dimethylformamid und Dimethylsulfoxid.

Üblicherweise werden 1- bis 15-Gew.-%-ige, insbesondere 8- bis 12 Gew.-%-ige Lösungen von ß-Cyclodextrin im organischen Lösungsmittel eingesetzt.

Beispiele für Alkalihydroxide sind Natriumhydroxid und Kaliumhydroxid, insbesondere Natriumhydroxid. Die Alkalihydroxide werden vorzugsweise in pulverisierter Form eingesetzt. Die Korngrößen liegen dabei zweckmäßigerweise im Bereich von 10 bis 100 µm, insbesondere im Bereich von 10 bis 30 µm. Die Alkalihydroxide werden dabei insbesondere in getrocknetem Zustand eingesetzt.

- 4 -                                    0121777

Die Alkalihydroxide werden zumindest in äquimolaren Mengen,
bezogen auf die Menge der zu methylierenden OH-Gruppen, eingesetzt. Vorzugsweise wird Alkalihydroxid jedoch im Überschuß
verwendet, wobei vorzugsweise pro Mol ß-Cyclodextrin 15 bis
25 Mol, insbesondere ca. 20 Mol, an Alkalihydroxid eingesetzt werden.

Als Methylierungsmittel wird Dimethylsulfat herangezogen, das
ggf. in frisch destilliertem Zustand eingesetzt wird. Die Menge
an Methylierungsmittel beträgt pro Mol ß-Cyclodextrin vorzugsweise 15 bis 25 Mol, insbesondere etwa 20 Mol.

Üblicherweise wird so vorgegangen, daß eine Lösung von ß-
Cyclodextrin in Dimethylformamid oder Dimethylsulfoxid bzw.
deren Gemischen auf eine Temperatur von - 10 °C bis 0 °C abgekühlt wird. Danach wird die vorgesehene Menge an Alkalihydroxid zugegeben. Schließlich wird unter intensivem Rühren
Dimethylsulfat zudosiert, wobei die Temperatur des Reaktionsgemisches im Bereich von - 10 bis 0 °C, insbesondere - 7 bis
- 3 °C, gehalten wird.

Der Fortschritt der Methylierungsreaktion wird beispielsweise
durch Probenentnahme anhand von Dünnschichtchromatogrammen
verfolgt. Die Methylierungsreaktion wird zweckmäßigerweise
unterbrochen, sobald keine Zunahme an Zielprodukt mehr festgestellt wird. Nach dem erfindungsgemäßen Verfahren wird ein
Reaktionsgemisch erhalten, das, bezogen auf die Menge methylierten ß-Cyclodextrins etwa 70 Gewichtsteile an Zielprodukt
und etwa 30 Gewichtsteile an ß-Cyclodextrinen aufweist, die
einen höheren und niedrigeren Methylierungsgrad aufweisen.

Die Methylierungsreaktion wird schließlich, am besten durch
Zugabe von wäßriger Ammoniaklösung, unterbrochen. Das Reaktionsgemisch kann dabei erwärmt werden. Um sicherzustellen,
daß überschüssiges Dimethylsulfat quantitativ zerstört ist,
kann das Reaktionsgemisch noch auf 80 °C erwärmt werden.

Zur Aufarbeitung wird das Reaktionsgemisch zunächst mit Wasser versetzt und durch Zugabe von organischen, mit Wasser nicht mischbaren Lösungsmitteln, wie Methylenchlorid oder Chloroform, ein organisch/wäßriges 2-Phasen-System hergestellt. Das Zielprodukt wird in die organische Phase extrahiert. Nach dem Abziehen des Lösungsmittels und beispielsweise Trocknen des Produkts bei Temperaturen bis zu 120 °C verbleibt ein Produkt von sirupartiger Konsistenz.

Das Rohprodukt wird am besten in Wasser umkristallisiert. Dabei wird von der Eigenschaft des Dimethyl-ß-cyclodextrins Gebrauch gemacht, daß die genannte Substanz in kaltem Wasser gut - in heißem Wasser dagegen schwer löslich ist. Dimethyl-ß-cyclodextrin fällt als kristallines, farbloses Produkt an.

Das Rohprodukt kann auch nach anderen oder zusätzlich nach anderen Aufarbeitungsmethoden behandelt werden, wie beispielsweise Chromatographieren und dergleichen.

Nach dem erfindungsgemäßen Verfahren gelingt es, Heptakis-[2.6-di-O-methyl]-ß-cyclodextrin bei erhöhter Produktausbeute in einem 1-Stufen-Verfahren herzustellen. Das Verfahren eignet sich für die Produktion des Dimethyl-ß-Cyclodextrins in industriellem Maßstab und schafft damit erstmals die Voraussetzung dafür, daß dieses Produkt eine breite technische Anwendung, beispielsweise auf dem Arzneimittelsektor, auf den Gebieten des Pflanzenschutzes, der Kosmetik oder in der Nahrungsmittelindustrie, finden kann.

Die Erfindung wird nun anhand eines Beispiels näher erläutert:

Beispiel

11,35 g (0,01 Mol) wasserfreien ß-Cyclodextrins wurden in 100 ml absoluten Dimethylformamids gelöst und unter heftigem Rühren auf - 7 °C abgekühlt. Danach wurden portionsweise 8,4 g (0,21 Mol) pulverisierten Natriumhydroxids (mittlere Korn-

größe 20 μm) portionsweise innerhalb von 10 Minuten zugegeben. Danach wurden 20 ml (0,21 Mol) frisch destillierten Dimethylsulfats innerhalb von 15 Minuten zugetropft. Die Reaktionstemperatur wurde im Bereich von - 7 bis - 5 °C gehalten. Danach wurde noch weitere 4 Stunden bei einer Temperatur von - 3 bis - 5 °C gerührt. Der Fortschritt der Methylierungsreaktion wurde durch Probenentnahme anhand von Dünnschichtchromatogrammen verfolgt. Nach einer Reaktionszeit von 4 Stunden wurde keine Zunahme an Zielprodukt mehr festgestellt. Das Dünnschichtchromatogramm zeigte folgende Produktverteilung an methylierten Cyclodextrinen: 7 Teile Zielprodukt, 1,5 Teile übermethyliertes ß-Cyclodextrin, 1,5 Teile untermethyliertes ß-Cyclodextrin.

Das Reaktionsgemisch wurde nun mit 20 ml 25 Gew.-%-iger wäßriger Ammoniaklösung versetzt und zunächst auf 20 °C, schließlich auf 80 °C, unter Rühren erhitzt.

Danach wurden zunächst 100 ml Wasser zugegeben und schließlich das Reaktionsgemisch viermal mit jeweils 200 ml Methylenchlorid extrahiert. Die organische Phase wurde noch zweimal mit 300 ml Wasser gewaschen und mit Natriumsulfat getrocknet. Nach Abziehen des Lösungsmittels wurde noch im Vakuum bei 120 °C getrocknet.

Es verblieb ein Rohprodukt von sirupartiger Konsistenz, das aus Wasser umkristallisiert wurde. Hierzu wurde das Rohprodukt zunächst in 30 ml kaltem Wasser gelöst, auf 80 °C erhitzt und an einem vorgewärmten Filter filtriert. Nach dreimaligem Umkristallisieren nach der vorstehend beschriebenen Methode wurden 3,27 g, entsprechend 24,6 % der Theorie, an Zielprodukt erhalten.

Schmelzintervall 278 bis 285 °C.

P a t e n t a n s p r ü c h e

1. Verfahren zur Herstellung von Heptakis-[2.6-di-O-methyl]-
ß-cyclodextrin durch Methylierung von ß-Cyclodextrin in
organischer Phase, d a d u r c h  g e k e n n -
z e i c h n e t ,  daß ß-Cyclodextrin in Gegenwart von
Alkalihydroxid mit Dimethylsulfat bei Temperaturen von
- 10 bis 0 °C methyliert wird.

2. Verfahren nach Anspruch 1, d a d u r c h  g e k e n n -
z e i c h n e t ,  daß Alkalihydroxid in pulverisierter
Form verwendet wird.

3. Verfahren nach Anspruch 2, d a d u r c h  g e k e n n -
z e i c h n e t ,  daß NaOH mit einer Teilchengröße von
10 bis 100 µm verwendet wird.

4. Verfahren nach Anspruch 1, d a d u r c h  g e k e n n -
z e i c h n e t ,  daß als organische Phase Dimethylformamid verwendet wird.